## Europäisches Patentamt
## European Patent Office
## Office européen des brevets

(19)

(11) Numéro de publication: **0 039 853**
**B1**

(12) # FASCICULE DE BREVET EUROPEEN

(45) Date de publication du fascicule du brevet: **15.02.84**

(51) Int. Cl.³: **B 41 J 5/10, G 06 F 3/14, G 06 C 7/08**

(21) Numéro de dépôt: **81103316.6**

(22) Date de dépôt: **02.05.81**

(54) Clavier.

(30) Priorité: **09.05.80 CH 3645/80**

(43) Date de publication de la demande:
**18.11.81 Bulletin 81/46**

(45) Mention de la délivrance du brevet:
**15.02.84 Bulletin 84/7**

(84) Etats contractants désignés:
**AT BE CH FR IT LI LU NL SE**

(56) Documents cités:
**GB - A - 1 521 435**

**ELECTRONICA TOP INTERNATIONAL, vol. 4, no. 2, février '79, BE J. LEYTEN-LEUSDEN: "Spelen met de PET", pages 42.43**
**CHIP-Zeitschrift für Mikrocomputertechnik, no. 1, janvier '80, DE CHP-TEST: "Grossmeister", pages 39-41**
**CHIP-Zeitschrift für Mikrocomputertechnik", no. 4, avril '80, DE CHIP-TEST: "Der Neue aus Japan", pages 47-48**

(73) Titulaire: **SOCIETE DES PRODUITS NESTLE S.A.**
**Case postale 353**
**CH-1800 Vevey (CH)**

(72) Inventeur: **Waldburger, Heinz Max**
**Ancienne Forge**
**CH-1699 Maracon (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Clavier

La présente invention se rapporte à un clavier du type utilisé pour introduire des informations graphiques dans un dispositif de traitement de l'information.

Il existe de nombreux dispositifs de traitement de l'information, depuis la machine à écrire mécanique jusqu'à l'ordinateur. Ces dispositifs sont souvent équipés de claviers pour introduire des informations alphanumériques. Ces informations peuvent être débitées ou affichées par le dispositif en même temps qu'elles sont introduites par le clavier, comme dans les machines à écrire courantes. Alternativement, les informations peuvent être stockées dans le dispositif après leur introduction au moyen du clavier et débitées ou affichées plus tard.

De nombreux dispositifs modernes de traitement de l'information sont capables de traiter des informations graphiques en plus des informations alphanumériques. Par exemple, certains dispositifs sont capables de traiter des informations représentant des cadres composés de lignes horizontales et verticales. De tels cadres peuvent être affichés en même temps que les informations alphanumériques. Cette possibilité est particulièrement avantageuse pour la présentation de données comptables ou statistiques sous forme de tableaux. Les lignes verticales du cadre peuvent être les bords du tableau ou les limites entre colonnes adjacentes à l'intérieur du tableau. Les lignes horizontales peuvent aussi définir les limites du tableau et séparer les différentes portions de colonnes de données pour faciliter la lecture.

Des claviers ont été créés pour introduire les informations graphiques susmentionnées dans des dispositifs de traitement de l'information. De tels claviers comprennent généralement une touche pour une ligne horizontale et une touche pour une ligne verticale. L'opérateur peut "tirer" une ligne en pressant la touche de la ligne horizontale. L'information représentative de la ligne verticale est introduite de manière analogue avec la touche de la ligne verticale.

Il est difficile de tracer proprement des cadres seulement au moyen des touches de lignes horizontale et verticale, parce qu'il est difficile de représenter convenablement certaines jonctions de lignes avec ces seules touches. Par exemple, la représentation nette d'un coin en L exige de l'opérateur qu'il garde le contrôle tant de la touche de ligne horizontale que de la touche de ligne verticale de telle sorte que les lignes horizontale et verticale se terminent à leur jonction exactement au même point.

Pour obvier à cette difficulté, des claviers pour introduire des informations graphiques ont été équipés de touches supplémentaires pour introduire des signes représentant les jonctions en question. Ainsi, il existe des touches spéciales pour des jonctions en forme de L, de T et de croix par exemple: ELECTRONICA TOP INTERNATIONAL, vol. 4, no. 2 février 1979 BE J. LEYTEN-LEUSDEN: "spelen met de PET, pages 42, 43. En pressant la touche correspondante, l'opérateur peut signaler au dispositif qu'une jonction particulière est désirable et le dispositif produira automatiquement une jonction parfaite. Pour utiliser un clavier pourvu de telles touches avec efficacité, l'opérateur doit apprendre l'emplacement des touches de signes de jonction et s'en souvenir pendant qu'il travaille. Cependant, les claviers de signes graphiques en usage jusqu'ici ne se prêtent guère à cet apprentissage et cette mémorisation, car les touches des signes de jonction ont été généralement disposées sans système logique.

La présente invention concerne un clavier de signes graphiques d'usage facile, parce que les touches pour les différentes jonctions sont disposées sur le clavier dans des positions correspondant aux positions les plus courantes des jonctions sur les cadres à produire. Par exemple, une jonction en forme de L composée d'une ligne verticale s'étendant au dessus du point de jonction et d'une ligne horizontale s'étendant à droite du point de jonction est placée généralement en bas à gauche d'un cadre. Dans un clavier selon l'invention, la touche pour cette jonction est placée dans le coin inférieur gauche d'un groupe de touches de signes de jonction.

Dans la présente description, le terme "jonction en L" désigne une jonction en L entre une ligne verticale et une ligne horizontale. Les termes supérieur, inférieur, gauche et droit désignent l'orientation des jonctions en L. Dans un coin supérieur, la ligne verticale s'étend du point de jonction vers le bas; dans un coin inférieur, la ligne verticale s'étend du point de jonction vers le haut. Dans un coin gauche, la ligne horizontale s'étend du point de jonction vers la droite et dans un coin droit, la ligne horizontale s'étend du point de jonction vers la gauche.

Le terme "jonction en T" désigne une jonction en forme de T entre une ligne verticale et une ligne horizontale dans laquelle une de ces lignes s'étend dans les deux directions depuis le point de jonction, formant ainsi la barre du T, tandis que l'autre ligne s'étend dans une direction seulement depuis le point de jonction, formant ainsi la jambe du T. Les termes gauche, droit, supérieur et inférieur désignent l'orientation des jonctions en T. Dans une jonction gauche en T, la barre du T est disposée verticalement à gauche et la jambe s'étend vers la droite du point de jonction. Dans une jonction droite en T, la jambe s'étend vers la gauche du point de jonction. Dans une jonction supérieure en T, la barre est en haut et la jambe descend verticalement du point de jonction (comme dans la lettre T majuscule). Dans une jonction inférieure en T, la barre est en bas et la jambe s'étend verticalement du point de jonction vers le haut.

Dans un clavier selon l'invention, il y a une tyouche pour chacun des signes de jonction en L et en T précédemment mentionnés. Ces touches sont disposées en groupe par rangées et colonnes, les touches pour les jonctions en L supérieure gauche, inférieure gauche, supérieure droite et inférieure droite étant disposées respectivement dans les coins supérieur gauche, inférieur gauche, supérieur droit et inférieur droit du groupe. Les touches pour les jonctions en T sont placées sur les côtés du groupe, entre les touches pour les jonctions en L. Les touches pour les jonctions en T inférieure, supérieure, gauche et droite sont disposées respectivement dans les rangées et colonnes inférieure, supérieure, gauche et droite du groupe. Une touche pour une jonction en croix peut être disposée vers le centre du groupe.

Le groupe peut être en forme de matrice ayant trois colonnes et trois rangées. D'autres touches pour les lignes verticale et horizontale peuvent être prévues et disposées près de la rangée inférieure du groupe.

Les touches pour les signes de jonction et les lignes peuvent aussi servir de touches pour introduire des informations numériques, une touche de sélection (comme la barre des majuscules des machines à écrire) permettant de choisir entre un premier mode dans lequel les touches introduisent des signes graphiques et un second mode dans lequel les touches introduisent des informations numériques. Cette forme d'exécution particulière est spécialement avantageuse parce que les informations numériques sont souvent introduites en liaison avec des signes pour former des encadrements, lors de la préparation de tableaux comptables ou statistiques par exemple. En outre, l'arrangement utilisé dans une forme particulière d'exécution de la présente invention pour l'emplacement des touches de signes de jonction, de ligne horizontale et de ligne verticale est analogue à la disposition usuelle des touches utilisées pour l'introduction d'informations numériques dans des dispositifs de traitement de l'information. Ainsi, l'opérateur n'a pas besoin d'apprendre une disposition nouvelle de touches de chiffres.

Le dessin annexé représente, à titre d'exemple, deux formes d'exécution de l'invention.

La Fig. 1 représente un cadre ou encadrement du genre qui doit être produit au moyen du clavier selon l'invention.

La Fig. 2 est une vue en plan représentant un clavier selon une forme d'exécution de l'invention.

La Fig. 3 est une vue semblable à celle de la Fig. 2 mais représentant un clavier selon une autre forme d'exécution de l'invention.

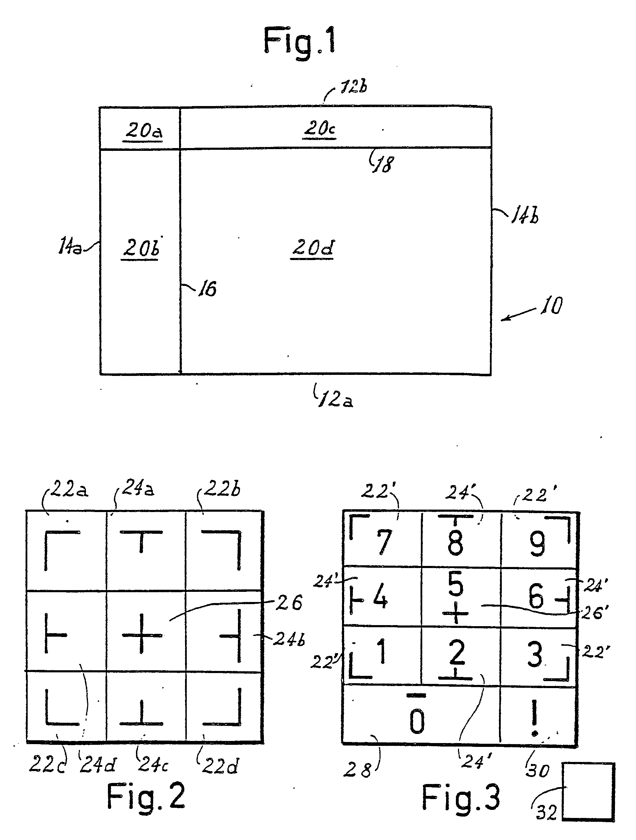

Au dessin, à la Fig. 1, un cadre typique comprend des lignes d'encadrement horizontales 12a et 12b et des lignes d'encadrement verticales 14a et 14b. Des lignes de séparation verticale 16 et horizontale 18 divisent l'espace du cadre en quatre zones 20a à 20d. Un tel cadre peut être utilisé en conjonction avec des informations numériques, différents groupes d'informations étant placés dans chaque zone 20a à 20d.

Il y a des jonctions en L entre les lignes d'encadrement aux quatre coins du cadre. Par exemple, il y a une jonction en L inférieure gauche entre les lignes d'encadrement 12a et 14a au coin inférieur gauche du cadre, et il y a une jonction en L supérieure droite entre les lignes 12b et 14b au coin supéieur droit du cadre. Il y a une jonction en forme de croix entre les lignes de séparation 16 et 18 vers le centre du cadre et il y a des jonctions en T le long des bords du cadre. Par exemple, il y a une jonction en T inférieure entre les lignes 12a et 16 et il y a une jonction en T droite entre les lignes 14b et 18.

Le clavier représenté à la Fig. 2 présente des touches pour les jonctions du cadre qui vient d'être décrit. Ainsi qu'on le voit sur la figure, chaque touche porte un signe représentatif de la jonction correspondante. Les touches 22a à 22d correspondent à des jonctions en L, les touches 24a à 24d à des jonctions en T et la touche 26 correspond à une jonction en croix. Quant on presse la touche 24a, par example, le signe d'une jonction supérieure en T est introduit dans le dispositif de traitement de l'information; quand la touche 22d est pressée, le signe d'une jonction inférieure droite en L est introduit.

Les touches sont disposées en rangs sous la forme d'une matrice de trois colonnes et trois rangées. La disposition des touches de signes de jonction correspond à la disposition usuelle des jonctions dans un cadre tel que celui représenté à la Fig. 1. Ainsi, les touches de signes de jonction en L sont placées dans les coins du groupe, les touches de signes de jonction en T le long des côtés du groupe, entre les touches de signes de jonction en L, et la touche de signe de jonction en croix est au milieu du groupe. Cette correspondance logique entre l'emplacement de chaque touche dans le groupe et la place usuelle du signe de jonction dans le cadre à produire facilite à l'opérateur l'apprentissage de la position des touches et rend plus aisée la frappe de la touche correcte au cours de son travail.

Le clavier représenté à la Fig. 2 peut aussi être pourvu de touches additionnelles (non représentées) pour introduire des lignes horizontales et verticales dans le dispositif de traitement de l'information. Naturellement, il est possible d'avoir d'autres touches pour introduire des informations alphabétiques, numériques ou autres. Le clavier est associé à un mécanisme ou un circuit interne correspondant à l'information à introduire dans le dispositif de traitement de l'information. Si celui-ci est une machine à écrire mécanique, le clavier sera généralement relié à un mécanisme interne tel qu'une pression sur chaque touche actionne mécaniquement un signe. Si le dispositif de traitement de l'information est électronique, le mécanisme de la touche actionne un transducteur approprié pour produire un signal électrique.

Le clavier représenté à la Fig. 3 présente un groupe de trois colonnes et trois rangées de touches 22' à 26' analogue aux touches du clavier de la Fig. 2. Le clavier de la Fig. 3, toutefois, est pourvu de deux touches additionnelles disposées parallélement à la rangée inférieure des autres touches, ainsi qu'une touche de sélection 32 dont la fonction est analogue à celle de la barre des majuscules dans une machine à écrire. Chaque touche 22' à 26' est associée à la fois à un signe de jonction et à un chiffre de 1 à 9. Selon que la touche 32 est pressée ou non, la pression sur une des touches 22' à 26' introduira un signe de jonction ou un chiffre, le signe ou le chiffre correspondant à la touche respective. Par exemple, en pressant la touche 32 et la touche 26', un signe de jonction en forme de croix est introduit. Si cette même touche 26' est pressée sans pression sur la touche 32, c'est le chiffre 5 qui sera introduit. L'action des touches 28 et 30 dépend aussi de l'action de la touche 32. Une pression sur la touche 28 introduira une ligne horizontale ou le chiffre 0 suivant que la touche 32 est pressée ou non. De même, une pression sur la touche 30 introduira une ligne verticale en pressant la touche 32, un point en ne pressant pas cette dernière.

Le clavier selon la Figure 3 présente un arrangement logique des touches de signes de jonction, des lignes verticale et horizontale. Ces mêmes touches sont disposées comme les touches numériques de certains claviers actuels. Ainsi, la disposition des touches facilite l'actionnement des signes graphiques comme des chiffres. Du fait que les mêmes touches servent à introduire les informations graphiques et les chiffres, l'opérateur ne déplace pas la main en composant un tableau de chiffres en colonnes et encadré.

La disposition des chiffres sur les touches peut correspondre à différentes normes. Par exemple, ils peuvent être disposés comme sur les téléphones à boutons, c'est-à-dire que les chiffres 1, 2 et 3 forment la rangée supérieure de touches 22', 24', 22' et les chiffres 7, 8 et 9 la rangée inférieure.

Un clavier selon l'invention a été utilisé avec succès en association avec un dispositif de traitement de l'information du type désigné par "2645 Display Station" et mis sur le marché par Hewlett Packard Co de Palo Alto, Californie. Dans cet emploi, le clavier selon l'invention remplace le groupe de touches numériques livré usuellement avec ce dispositif.

Bien entendu, diverses variantes peuvent être imaginées sans sortir du cadre de l'invention. Ainsi, les touches ne seront pas nécessairement carrées ou rectangulaires comme celles représentées au dessin, mais peuvent être de forme quelconque. Il n'est pas non plus indispensable que les touches portent des signes ou des chiffres correspondant aux signes ou chiffres qu'elles introduisent.

**Revendications**

1. Clavier pour introduire dans un dispositif de traitement de l'information des signes représentant des jonctions supérieure et inférieure gauches en L, supérieure et inférieure droites en L, des jonctions en T gauche, droite, supérieure et inférieure et une jonction en croix, caractérisé par le fait qu'il comprend une touche pour chacune de ces jonctions, ces touches étant disposées en groupe, les touches pour les jonctions en L supérieure gauche, inférieure gauche, supérieure droite et inférieure droite étant disposées respectivement dans le coin, supérieur gauche, inférieur gauche, supérieur, droit et inférieur droit du groupe, les touches pour les jonctions en T étant disposées sur les côtés du groupe entre les touches pour les jonctions en L, les touches pour les jonctions en T inférieure, supérieure, gauche et droite étant disposées respectivement en bas, en haut, à gauche et à droite du groupe, la touche pour la jonction en forme de croix étant environ au centre du groupe.

2. Clavier selon la revendication 1, caractérisé par le fait que le groupe est formé de troix colonnes verticales et trois rangées horizontales de touches.

3. Clavier selon la revendication 1, caractérisé par le fait qu'il comporte encore une touche de sélection, et que chaque touche du groupe permet d'introduire soit un signe de jonction, soit un chiffre selon la position de la touche de sélection.

4. Clavier selon la revendication 3, caractérisé par le fait que les touches des signes de jonction et des chiffres sont disposées de la manière suivante:

| Chiffre | Jonction |
| --- | --- |
| 1 | en L inférieure gauche |
| 2 | en T inférieure |
| 3 | en L inférieure droite |
| 4 | en T gauche |
| 5 | en croix |
| 6 | en T droite |
| 7 | en L supérieure gauche |
| 8 | en T supérieure |
| 9 | en L supérieure droite |

5. Clavier selon la revendication 4, comprenant une touche supplémentaire pour introduire, dans une position de la touche de sélection, une ligne horizontale et dans une autre position de la touche de sélection, le chiffre 0, ainsi qu'une autre touche supplémentaire pour introduire, dans une première position de la touche sélection, une ligne verticale et dans une autre position, un point.

6. Clavier selon la revendication 5, caractérisé par le fait que les touches supplémentaires sont disposées parallèlement aux touches du groupe.

## Patentansprüche

1. Tastenfeld für die Eingabe in eine Datenverarbeitungsanlage von Zeichen, die jeweils linke obere und untere L-Verbindungen, rechte obere und untere L-Verbindungen, linke, rechte, obere und untere T-Verbindungen und eine Kreuzverbindung darstellen, dadurch gekennzeichnet, dass jede dieser Verbindungen einer Taste entspricht, und dass diese Tasten in einer Gruppe angeordnet sind, wobei die Tasten für die linke obere L-Verbindung, die linke untere L-Verbindung, die rechte obere L-Verbindung und rechte untere L-Verbindung jeweils in der linken oberen, linken unteren, rechten oberen und rechten unteren Ecke der Gruppe angeordnet sind, die Tasten für die T-Verbindungen auf den Seiten der Gruppe, zwischen den Tasten für die L-Verbindungen angeordnet sind, die Tasten für die untere, obere, linke und rechte T-Verbindung jeweils unten, oben, links und rechts der Gruppe, und die Taste für die Kreuzverbindung ungefähr in der Mitte der Gruppe ist.

2. Tastenfeld nach Anspruch 1, dadurch gekennzeichnet, dass die Gruppe aus drei senkrechten Kolonnen und drei waagerechten Reihen von Tasten zusammengestellt ist.

3. Tastenfeld nach Anspruch 1, dadurch gekennzeichnet, dass weiter eine Wahltaste vorhanden ist, und dass jede Taste der Gruppe je nach der Stellung der Wahltaste entweder die Eingabe eines Verbindungszeichens oder die Eingabe einer Zahl ermöglicht.

4. Tastenfeld nach Anspruch 3, dadurch gekennzeichnet, dass die Tasten der Verbindungszeichen und der Zahlen wie folgt angeordnet sind:

| Zahl | Verbindung |
|---|---|
| 1 | L unten links |
| 2 | T unten |
| 3 | L unten rechts |
| 4 | T links |
| 5 | Kreuz |
| 6 | T rechts |
| 7 | L oben links |
| 8 | T oben |
| 9 | L oben rechts |

5. Tastenfeld nach Anspruch 4, eine zusätzliche Taste beinhaltend, zur Eingabe, in einer Stellung der Wahltaste, einer waagerechten Linie, und in einer anderen Stellung der Wahltaste, der Zahl 0, und mit einer anderen zusätzlichen Taste für die Eingabe, in einer ersten Stellung der Wahltaste, einer senkrechten Linie, und in einer anderen Stellung, eines Punktes.

6. Tastenfeld nach Anspruch 5, dadurch gekennzeichnet, das die zusätzlichen Tasten parallel zu den Tasten der Gruppe angeordnet sind.

## Claims

1. Keyboard for entering into an information processing device signals representative of upper and lower left-hand L-intersections, upper and lower right-hand L-intersections, left, right, upper and lower T-intersections and a cruciform intersection, characterised in that it comprises one key for each of these intersections, these keys being disposed in a group, the keys for the upper left, lower left, upper right and lower right L-intersections being disposed respectively in the upper left, lower left, upper right and lower right corner of the group, the keys for the T-intersections being disposed on the sides of the group between the keys for the L-intersections, the keys for the lower, upper, left and right T-intersections being disposed respectively down, up, left and right of the group, the key for the cruciform intersection being approximately in the centre of the group.

2. Keyboard according to claim 1, characterised in that the group is composed of three vertical columns and three horizontal rows of keys.

3. Keyboard according to claim 1, characterised in that it further comprises a shift key, and that according to the position of the shift key each key of the group permits entry of either an intersection signal or a digit.

4. Keyboard according to claim 3, characterised in that the keys for the intersection signals and for the digits are disposed as follows:

| Digit | Intersection |
|---|---|
| 1 | lower left L |
| 2 | lower T |
| 3 | lower right L |
| 4 | left T |

| Digit | Intersection |
|---|---|
| 5 | cruciform |
| 6 | right T |
| 7 | upper left L |
| 8 | upper T |
| 9 | upper right L |

5. Keyboard according to claim 4, comprising an additional key for entering, in one position of the shift key, a horizontal line and in another position of the shift key, the digit 0, and another additional key for entering a vertical line in one position of the shift key and a point in another position.

6. Keyboard according to claim 5, characterised in that the additional keys are disposed parallel to the keys of the group.

# Fig.1

# Fig.2

# Fig.3